# EUROPEAN PATENT APPLICATION

(11) **EP 2 367 036 A1**
(43) Date of publication of application: **21.09.2011**
(21) Application number: 10275024.7
(22) Date of filing: 02.03.2010
(51) Int. Cl.: G02B 6/36

(54) **Optical fibres fixed on substrates**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

Described herein is a method and apparatus for the formation of fibre structures and in particular, optical fibre structures. A fibre laying head (200) houses a source of optical fibre material (204) to which an adhesive coating is applied prior to laying the adhesive-coated optical fibre material onto a substrate (214). The fibre laying head (200) also houses a radiation source (212) that generates a radiation beam (216) to cure the adhesive in the adhesive-coated optical fibre material to form a bond between the adhesive-coated optical fibre material and the substrate.

## Description

The present invention relates to fibre structures, and is more particularly, although not exclusively, concerned with the fibre laying and formation of optical fibre structures.

Optical fibres are widely used in many applications including communications and control systems. In such applications, the optical fibre is connected to linkage nodes at each end. One linkage node sends signals containing relevant information from a signal source into the optical fibre and the other node receives the transmitted signals for transmission to other apparatus.

However, due to the fragile nature of optical fibres, they are usually overprotected using heavy and bulky protective sleeving to reduce the likelihood of damage.

It is an object of the present invention to provide a method for forming optical fibre structures that eliminate the need for heavy and bulky protective sleeving.

It is another object of the present invention to provide a fibre laying head for use in the formation of optical fibre structures.

It is a further object of the present invention to provide in-situ protection to the optical fibre structures through the application of additional coatings to the surface thereof.

According to one aspect of the present invention, there is provided a method of forming a fibre structure, the method comprising the steps of: a) applying an adhesive-coated fibre material onto a substrate; and b) curing the adhesive to adhere the fibre material to the substrate.

The method may further comprise the step of coating the adhesive-coated fibre material on the substrate prior to step b). Alternatively, the step of coating the adhesive-coated fibre material occurs after the material has been cured.

In one embodiment of the present invention, the adhesive-coated fibre material comprises a fibre having uncured adhesive applied thereto. The adhesive-coated fibre material may comprise a single optical fibre or many such fibres embedded within an adhesive. The adhesive-coated fibre material may be in the form of a fibre tape having at least one fibre arranged in an adhesive layer. The fibre tape may comprise a ribbon fibre. In either case, the method of the present invention may further comprise, prior to step a), the step dispensing the adhesive-coated fibre material from a spool.

In another embodiment of the present invention, the method further comprises, prior to step a), the step of coating at least one fibre with liquid adhesive to form the adhesive-coated fibre material.

In accordance with another aspect of the present invention, there is provided apparatus for laying an adhesive-coated fibre material onto a substrate to form a fibre structure, the apparatus comprising: a dispenser arrangement for dispensing the adhesive-coated fibre material onto the substrate; and a curing arrangement for curing the adhesive in the adhesive-coated fibre material to bond the adhesive-coated fibre material to the substrate.

The curing arrangement comprises a source of radiation arranged to irradiate the adhesive-coated fibre material to cure the adhesive therein. The source of radiation may comprise ultraviolet or infrared radiation. In each case, the adhesive in the adhesive-coated fibre material is chosen to be cured by ultraviolet or infrared radiation respectively. The adhesive may also be cured using convection heat, such as heat from a hot air gun.

The dispenser arrangement may comprise a spool of the adhesive-coated fibre material. Alternatively, the dispenser arrangement may comprise a spool of fibre material and an adhesive applicator, the fibre material from the spool passing through the adhesive applicator to form the adhesive-coated fibre material. The adhesive applicator may include a nozzle through which the adhesive-coated material is applied to the substrate.

Advantageously, the dispenser arrangement further comprises a guide for guiding the adhesive-coated fibre material onto the substrate and for holding it in position on the substrate prior to curing. The guide may include a splice for sizing the adhesive-coated fibre material to a particular length.

If extra protection is required for the fibre material within the fibre structure, a coating arrangement may be provided for coating the adhesive-coated material on the substrate. The coating arrangement may be located either upstream or downstream of the curing arrangement, that is to say, the coating may be applied either pre- or post-curing.

In accordance with a further aspect of the present invention, there is provided a fibre laying head comprising a body in which apparatus as described above is mounted.

In a particular embodiment, the fibre laying head is mounted on a robotic arm. This has the advantage that the fibre laying head can be used for the formation of fibre structures in confined or environmentally hazardous spaces. As an alternative, the fibre laying head can also be incorporated into a mobile robot, such as a robotic crawler, that can access normally inaccessible cavities such as the inside of pipes.

It will be appreciated that the fibre laying head can also be operated manually by an operator.

For a better understanding of the present invention, reference will now be made, by way of example only, to the accompanying drawings in which:-
Figure 1 is a schematic view of optical fibre laying apparatus in accordance with a first embodiment of the present invention;
Figure 2 is a schematic view of a fibre laying head in accordance with the present invention;
Figure 3 is a schematic view of a fibre laying head on the end of a robotic arm in accordance with the present invention;
Figure 4 is a schematic view of optical fibre laying apparatus in accordance with a second embodiment of the present invention;
Figure 5 is a schematic view of optical fibre laying apparatus in accordance with a third embodiment of the present invention;
Figure 6 is a schematic view of an optical fibre structure in accordance with the present invention;
Figure 7 is a schematic view of laying an optical fibre in accordance with the present invention;
Figure 8 is a schematic view of optical fibre laying apparatus in accordance with a fourth embodiment of the present invention; and
Figure 9 is a schematic view of optical fibre laying apparatus in accordance with a fifth embodiment of the present invention.

Although the present invention will be described with reference to the laying of optical fibres onto substrates, it will readily be appreciated that the method of the present invention can be used to lay other types of fibres or cable that needs to be laid down onto a substrate or surface.

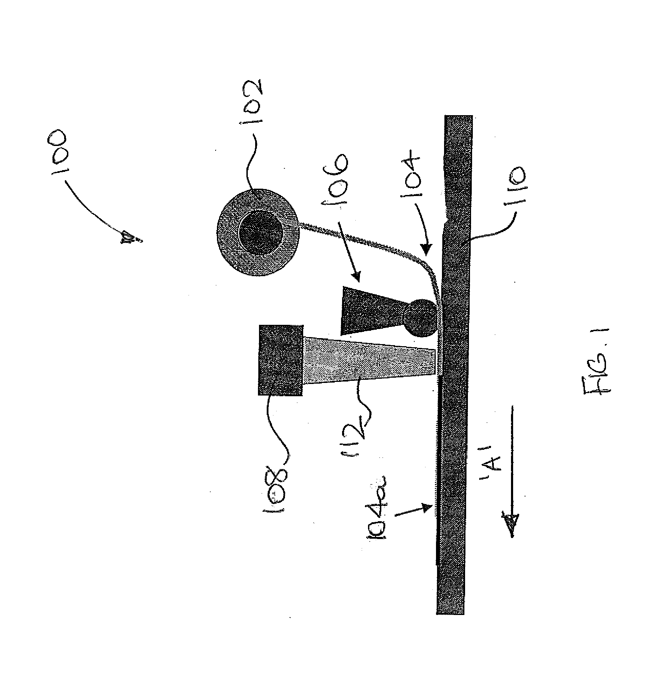

Referring to Figure 1, optical fibre laying apparatus 100 is shown. The apparatus 100 comprises an optical fibre spool 102 containing optical fibre 104 coated with uncured adhesive (not shown), a fibre guide 106 and a radiation source 108 is located downstream of the fibre guide 106.

A substrate 110 is also shown that can be moved relative to the optical fibre laying apparatus 100 in the direction indicated by arrow 'A'.

As the substrate 110 moves in the direction of arrow 'A' relative to the optical fibre laying apparatus 100, optical fibre 104 is dispensed from the optical fibre spool 102 and is guided and held down onto the substrate 110 by the fibre guide 106. The radiation source 108 provides adhesive curing radiation 112 for the uncured adhesive coating on the optical fibre 104 so that the optical fibre 104 adheres to the substrate 110 and becomes bonded therewith as indicated at 104a.

The radiation source 108 may comprise ultraviolet (UV) radiation and the uncured adhesive coating is one that is cured by UV radiation, for example, Ultrabond 774 which cures with great optical clarity and provides excellent resistance to humidity and moisture and is resistant to discoloration over long periods of time. Other suitable UV cured adhesives can also be used, for example, a Loctite UV adhesive [Loctite is a registered trade mark of Henkel Corporation of Gulph Mills, Pennsylvania 19406, USA].

Alternatively, the radiation source 108 may comprise infrared (lR) radiation and the uncured adhesive coating is a thermal adhesive that is cured by IR radiation.

The adhesive coating may also be cured using convection heat, for example, heat from a hot air gun.

The optical fibre 104 may comprise either glass or plastic optical fibres.

Although the optical fibre 104 has been described as a single fibre element, it will be appreciated that the optical fibre 104 may comprise more than one fibre element forming a strip of fibre elements.

If the adhesive used is clear when cured, the apparatus 100 can also be used to lay optical fibres on top of one another, the optical fibres comprising either single fibre elements or strips of fibre elements or any combination thereof.

Although the substrate 110 has been described as moving relative to the apparatus 100 where the apparatus 100 is fixed, it will readily be appreciated that the substrate 110 may be fixed and the apparatus 100 is arranged to move relative to the substrate.

The apparatus 100 may be of such a size that it can be hand-held for operation and is moved over the substrate 110 in a manual operation. Alternatively, the apparatus 100 can be held by a robotic arm that allows access to confined or environmentally hazardous spaces.

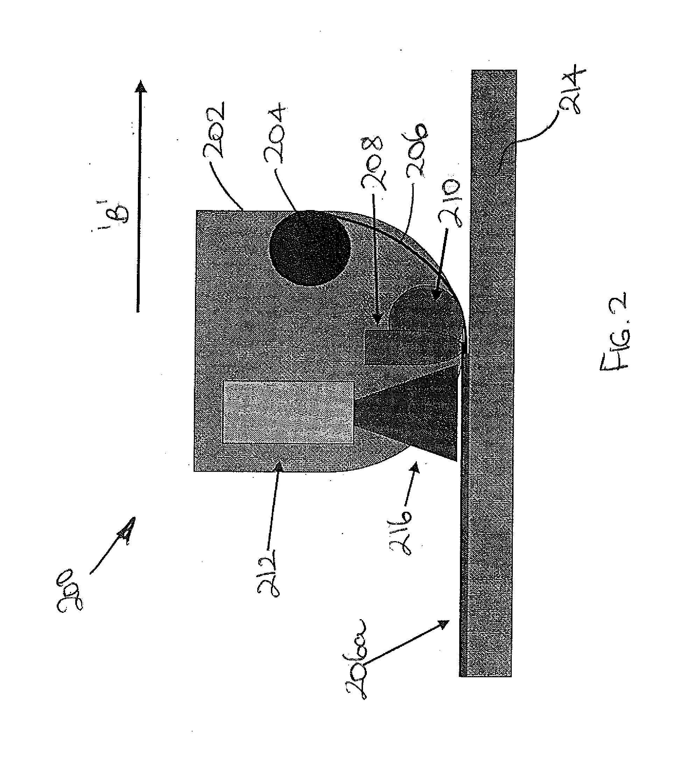

Figure 2 illustrates a fibre laying head 200 in which the elements of apparatus 100 of Figure 1 are mounted in a single housing.

The fibre laying head 200 comprises a housing 202 in which is mounted a spool 204 containing optical fibre 206, a fibre guiding and splice device 208, an adhesive dispenser 210 and a radiation source 212. In this case, the optical fibre 206 is uncoated and the adhesive is applied during the laying down of the optical fibre 206 on a substrate 214.

As the fibre laying head 200 is moved relative to the substrate 214 in the direction indicated by arrow 'B', the optical fibre 206 is dispensed from the spool 204 and passes through the fibre guiding and splice device 208. The device 208 holds the optical fibre 206 onto the substrate 214 for application of adhesive (not shown). The adhesive dispenser 210 is located downstream of the device 208 and operates to apply adhesive to (or wet) the dispensed fibre 206. The radiation source 212 is located downstream of the adhesive dispenser 210 and generates a beam of radiation 216 for illuminating the fibre 206 so as to cure the adhesive and secure the fibre 206 to the substrate 214 as indicated at 206a.

When a desired length of fibre 206a has been laid on the substrate 214, the device 210 splices the fibre 206 to terminate application to the substrate 214. The device 210 holds the free end of the fibre 206 in place ready for the next substrate onto which the fibre 206 needs to be applied.

Many different adhesives can be used. The specific adhesive is chosen in accordance with the fibre thickness, the fibre type (glass or plastic), and the substrate onto which the optical fibre is to be adhered. A clear adhesive (when cured) can be used to connect fibres of fibres to components, such as, beam splitters, sensors etc.

Subsequent adhesive or coating layers may also be applied. These layers are selected for the specific protection required. However, the adhesive and the subsequent coating layers may also include additional functionalities, for example, protection due to particular environmental conditions. One example of this is light leaking from the optical fibre may induce fluorescence in the coating and the nature of the fluorescence is affected the environmental conditions, such as, humidity, temperature, pressure etc.

A fibre laying head 200 as described in Figure 2 may have more than one type of adhesive, each one having a different purpose. For example, if a clear curing adhesive does not have the required properties for adhering the fibre to the substrate, this could be used for inter-fibre or component connection and a different adhesive could be used to stick the fibre to the substrate.

Although the radiation source 212 is shown within the fibre laying head 200, it could equally be located outside of the fibre laying head 200. In this case, the fibre laying head 200 is connected to a remote source of radiation by means of a fibre optic cable.

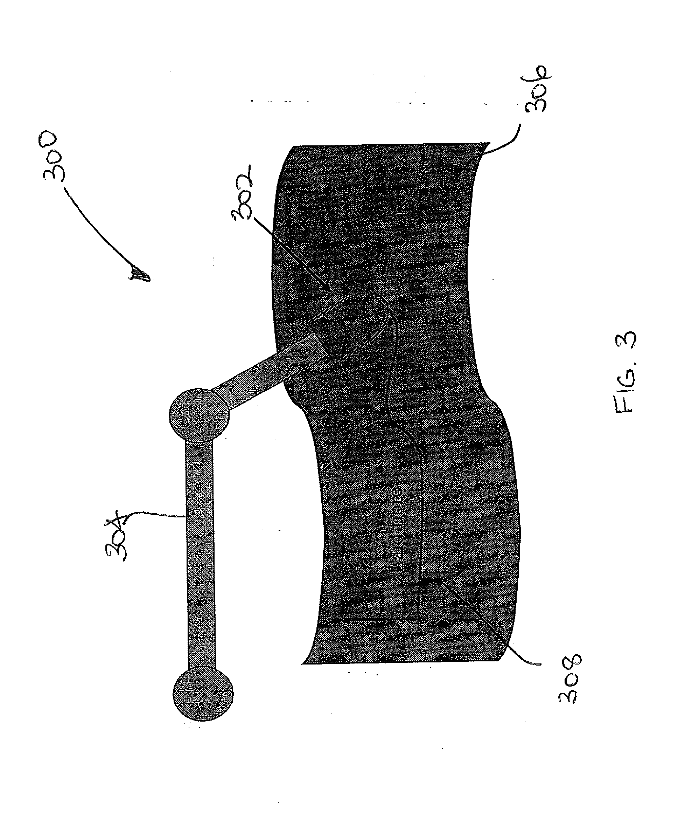

Figure 3 illustrates an arrangement 300 in which a fibre laying head 302 similar to the fibre laying head 200 of Figure 2 is attached to a robotic arm 304. The robotic arm 304 operates to move the fibre laying head 302 relative to a substrate 306 to lay down an optical fibre 308 onto the substrate 306. The robotic arm 304 may take any suitable form to provide appropriate control for the fibre laying head 302.

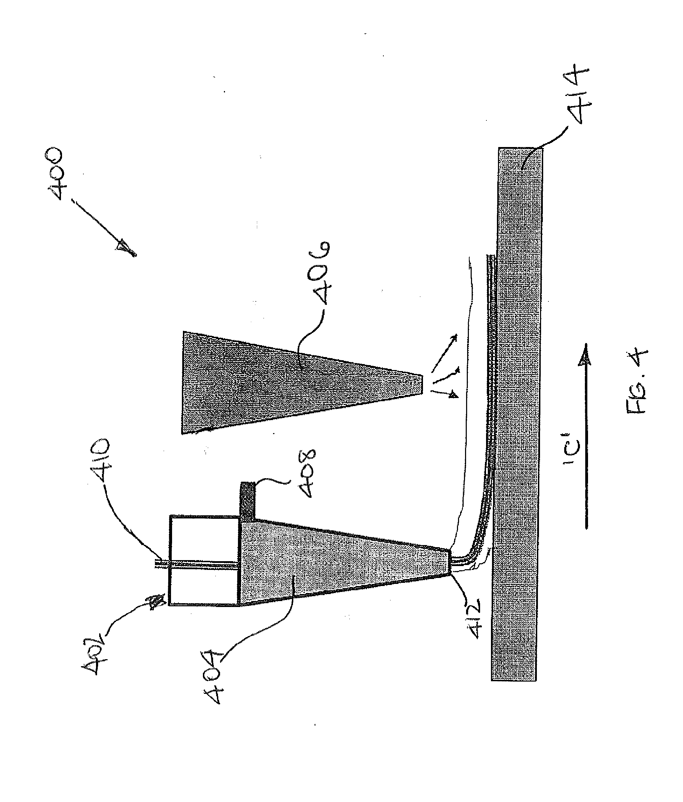

Figure 4 illustrates another arrangement 400 of the apparatus in accordance with the present invention. The arrangement 400 comprises a dispenser 402 containing a liquid adhesive 404 and a curing head 406 located downstream of the dispenser 402. The dispenser 402 has a top up mechanism 408 to ensure that the level of liquid adhesive 404 remains substantially constant.

Optical fibre 410 is fed from a spool (not shown) into the dispenser 402, through the liquid adhesive 404 and out through a nozzle 412. The nozzle 412 is located at a substrate 414 onto which the optical fibre 410 is to be laid. As the optical fibre 410 passes through the dispenser 402, the liquid adhesive 404 wets the fibre and provides sufficient adhesion to hold the optical fibre 410 in position temporarily on a substrate 414. The substrate 414 is arranged for movement relative to the dispenser 402 and the curing head 406 in the direction indicated by arrow 'C'.

Movement of the substrate 414 in the direction of arrow 'C' draws the optical fibre 410 with it due to the temporary adhesion of the wetted optical fibre 410 with the substrate 414. The curing head 406 dries and cures the liquid adhesive to secure the optical fibre 410 to the substrate 414.

Although only one curing head 406 is shown, it will be appreciated that more than one such head can be provided, for example, one for drying the adhesive and one for curing it.

The arrangement shown in Figure 4 can be automated so that the laying down of optical fibre 410 and its subsequent drying/curing is carried out without the need for the intervention of an operator.

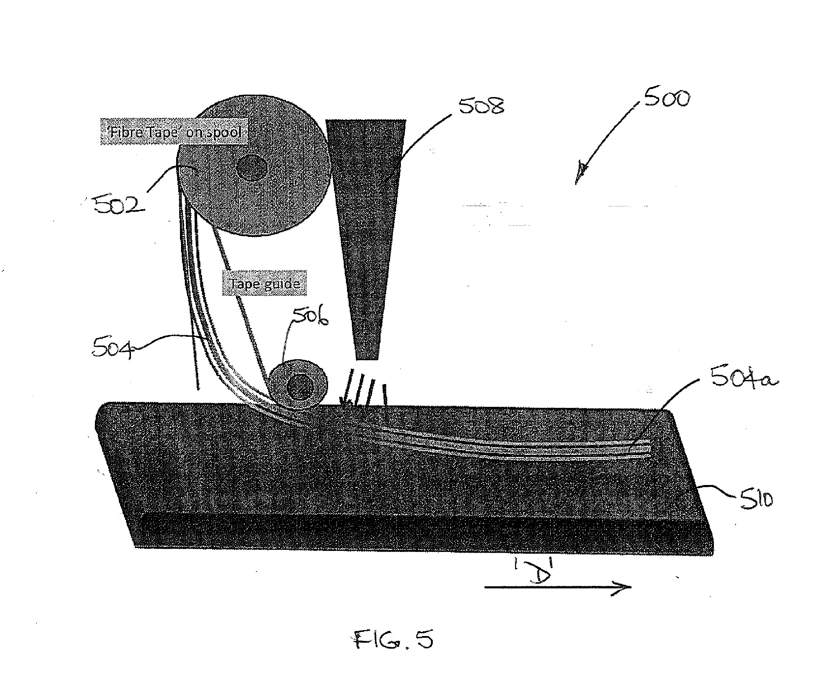

Figure 5 illustrates a further arrangement 500 of apparatus in accordance with the present invention. A spool 502 of optical fibre tape 504 is mounted to feed a tape guide 506. A curing tool 508 is located downstream of the tape guide 506. A substrate 510 is mounted for relative movement with respect to the tape guide 506 and curing tool 508 in the direction indicated by arrow 'D'.

The optical fibre tape 504 comprises at least one optical fibre in adhesive in the form of a tape. Naturally, the optical fibre tape 504 may comprise several optical fibres arranged side by side within adhesive to form the tape.

As the substrate 510 moves relative to the tape guide 506 and curing tool 508 in the direction indicated by arrow 'D', optical fibre tape 504 is positioned on the substrate 510 by the tape guide 506 and the curing tool 508 cures the adhesive so that it sets and bonds the optical fibre tape 504 to the substrate 510 as indicated by 504a.

In this arrangement, the laying down of the optical fibre tape and its subsequent curing can be automated.

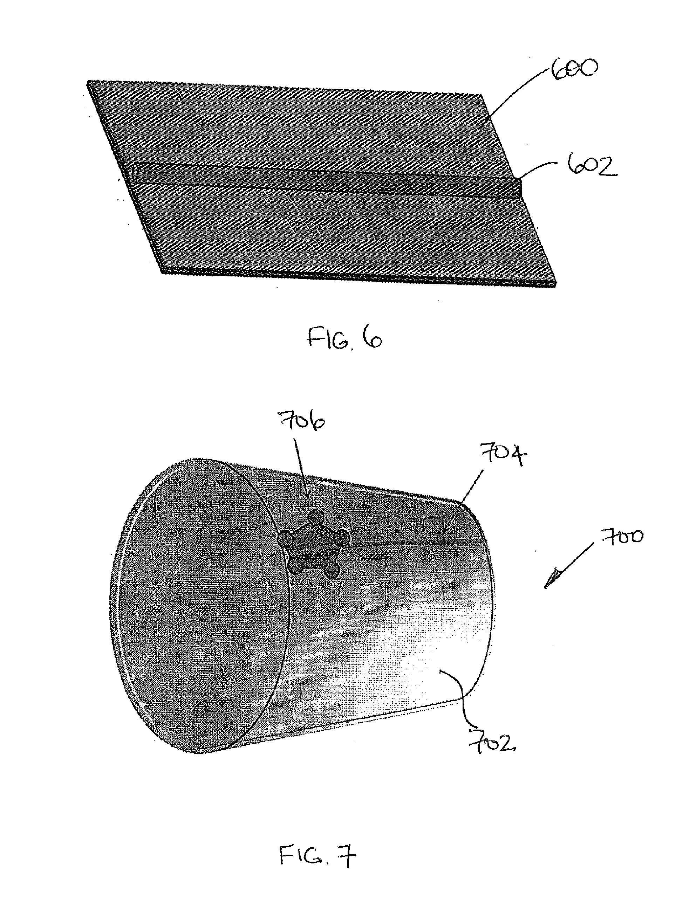

In Figure 6, a substrate 600 is shown on which an optical fibre tape 602 is located. The tape 602 is sticky enough to be hand laid onto the substrate 600 and to remain in position until it is cured. The optical fibre tape 602 may comprise one or more optical fibres bonded to the tape during manufacture. The optical fibres may be in the form of a ribbon fibre. The optical fibre tape 602 may have an adhesive layer formed thereon or it may be soaked in epoxy resin.

Figure 7 illustrates an arrangement 700 in which an optical fibre can be laid automatically or autonomously. Here, a pipe 702 is shown in which an optical fibre 704 is to be laid. As shown, the pipe 702 is not suitable for laying the optical fibre with any of the arrangements described above. In this case, a mobile robot 706 has a fibre laying head (not shown) located within it. The mobile robot 706 is directed through the pipe 702 and lays optically fibre 704 on the internal circumference of the pipe 702. The operation of the fibre laying head is similar to that described above with reference to Figure 2.

It will be appreciated that the mobile robot 706 can be used in any normally inaccessible cavity to lay optical fibre 704 either as single fibres or as tape as described above.

The process of laying down optical fibre has been described with reference to Figures 1 to 6 above in relation to a substantially flat substrate. The present invention is not limited to flat substrates and can also be applied to three-dimensional surfaces.

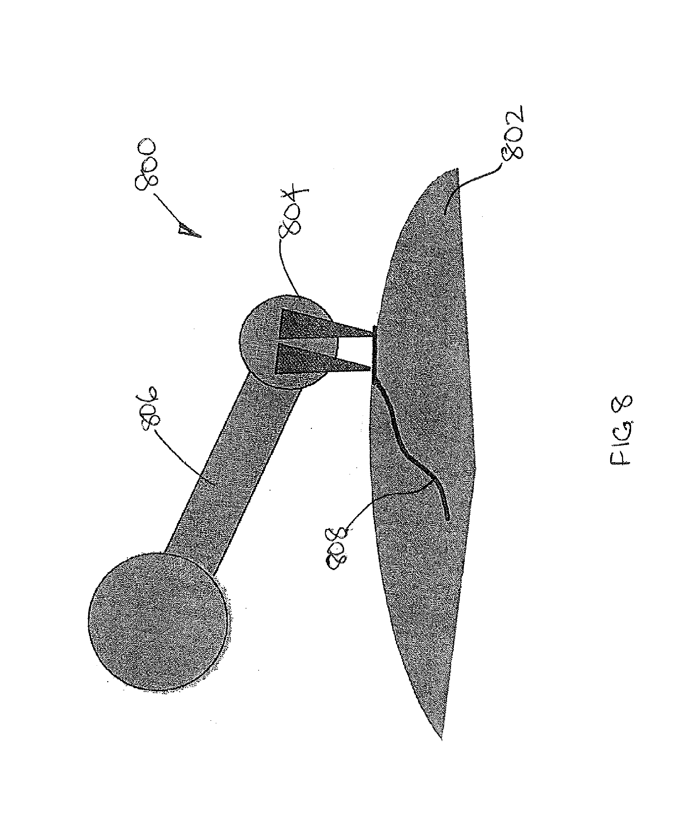

In Figure 8, an arrangement 800 including a substrate 802 having a three-dimensional surface is shown. A fibre laying head 804 is mounted on one end of a robotic arm 806. The fibre laying head 804 can be of the type described with reference to Figure 2. The robotic arm 806 can be preprogrammed for operation using any suitable programming tools. The robotic arm 806 also includes sensors (not shown) for sensing the shape of the three-dimensional surface of substrate 802 and for deploying an optical fibre 808 thereon.

Although a substantially uniform three-dimensional surface is shown in Figure 8, it will be appreciated that the arrangement 800 can also be applied to non-uniform three-dimensional surfaces with suitable programming of the robotic arm 806.

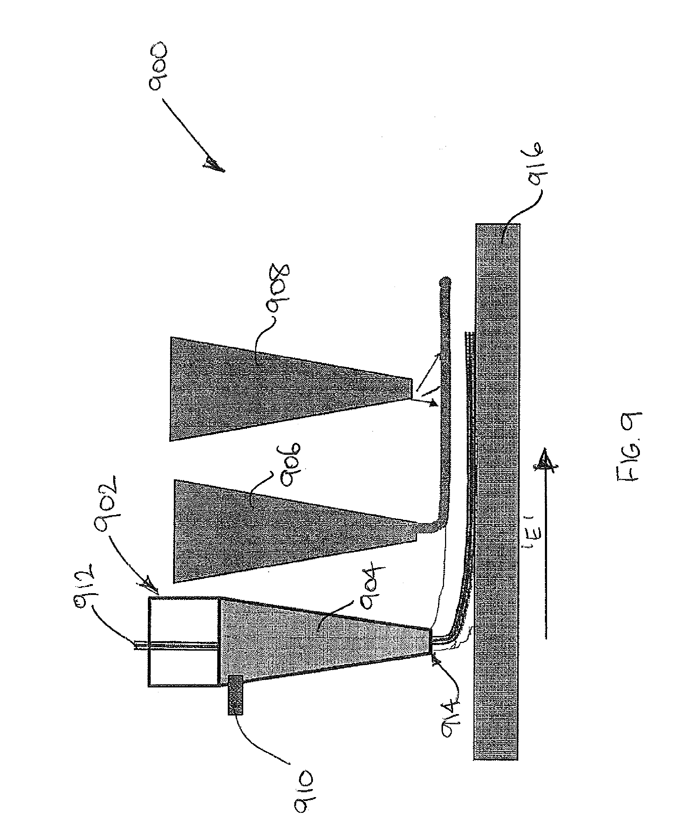

Figure 9 illustrates an arrangement 900 that is similar to that shown in Figure 4. The arrangement 900 comprises a dispenser 902 containing a liquid adhesive 904, a coating head 906 and a curing head 908. The coating head 906 is located downstream of the dispenser 902 and the curing head 908 is located downstream of the coating head 906. The dispenser 902 has a top up mechanism 910 to ensure that the level of liquid adhesive 904 remains substantially constant.

Optical fibre 912 is fed from a spool (not shown) into the dispenser 902, through the liquid adhesive 904 and out through a nozzle 914. The nozzle 914 is located at a substrate 916 onto which the optical fibre 912 is to be laid. As the optical fibre 912 passes through the dispenser 902, the liquid adhesive 904 wets the fibre and provides sufficient adhesion to hold the optical fibre 912 in position temporarily on a substrate 916. The substrate 916 is arranged for movement relative to the dispenser 902, the coating head 906 and the curing head 908 in the direction indicated by arrow 'E'.

Movement of the substrate 916 in the direction of arrow 'E' draws the optical fibre 912 with it due to the temporary adhesion of the wetted optical fibre 912 with the substrate 916. The coating head 906 applies additional coating to the optical fibre 912 to strengthen and protect it. The curing head 908 dries and cures the liquid adhesive to secure the optical fibre 912 to the substrate 916.

Although only one curing head 908 is shown, it will be appreciated that more than one such head can be provided, for example, one for drying the adhesive and one for curing it.

It will be appreciated that the arrangement of Figure 9 could be modified so that the adhesive is cured prior to being coated.

The arrangement shown in Figure 9 can be automated so that the laying down of optical fibre 912 and its subsequent coating and drying/curing is carried out without the need for the intervention of an operator.

Although the present invention has been described with reference to specific embodiments, it will be appreciated that these embodiments are not limiting. The fibre laying head as described above has many applications and can be used in many environments. Moreover, the fibre laying head is not limited to laying optical fibre but can be used to lay other types of fibres.

## Claims

1. A method of forming a fibre structure, the method comprising the steps of:-
a) applying an adhesive-coated fibre material onto a substrate; and
b) curing the adhesive to adhere the fibre material to the substrate.

2. A method according to claim 1, further comprising the step of coating the adhesive-coated fibre material on the substrate prior to step b).

3. A method according to claim 1, further comprising the step of coating the adhesive-coated fibre material on the substrate after step b).

4. A method according to any one of claims 1 to 3, wherein the adhesive-coated fibre material comprises a fibre having uncured adhesive applied thereto.

5. A method according to any one of claims 1 to 3, wherein the adhesive-coated fibre material comprises a fibre tape having at least one fibre arranged in an adhesive layer.

6. A method according to any one of the preceding claims, prior to step a), further comprising the step dispensing the adhesive-coated fibre material from a spool.

7. A method according to any one of claims 1 to 5, prior to step a), further comprising the steps of coating at least one fibre with liquid adhesive to form the adhesive-coated fibre material.

8. Apparatus for laying an adhesive-coated fibre material onto a substrate to form a fibre structure, the apparatus comprising:-
a dispenser arrangement for dispensing the adhesive-coated fibre material onto the substrate; and
a curing arrangement for curing the adhesive in the adhesive-coated fibre material to bond the adhesive-coated fibre material to the substrate.

9. Apparatus according to claim 8, wherein the curing arrangement comprises a source of radiation arranged to irradiate the adhesive-coated fibre material.

10. Apparatus according to claim 8 or 9, wherein the dispenser arrangement comprises a spool of the adhesive-coated fibre material.

11. Apparatus according to claim 8 or 9, wherein the dispenser arrangement comprises a spool of fibre material and an adhesive applicator, the fibre material from the spool passing through the adhesive applicator to form the adhesive-coated fibre material.

12. Apparatus according to claim 11, wherein the adhesive applicator includes a nozzle through which the adhesive-coated material is applied to the substrate.

13. Apparatus according to any one of claims 8 to 12, wherein the dispenser arrangement further comprises a guide for guiding the adhesive-coated fibre material onto the substrate and for holding it in position on the substrate prior to curing.

14. Apparatus according to any one of claims 8 to 13, further comprising a coating arrangement for coating the adhesive-coated material on the substrate.

15. A fibre laying head comprising a body in which apparatus according to any one of claims 8 to 14 is mounted.
